# EUROPEAN PATENT APPLICATION

(11) **EP 4 556 868 A1**
(43) Date of publication of application: **21.05.2025**
(21) Application number: 23909809.8
(22) Date of filing: 22.11.2023
(51) Int. Cl.: G01J 1/42, G09G 3/34, G09G 3/36, G02F 1/13357

(54) **AMBIENT LIGHT CALIBRATION METHOD AND APPARATUS**

(30) Priority: 30.12.2022 CN 202211734474
(71) Applicant: Huawei Technologies Co., Ltd., Shenzhen, Guangdong 518129 (CN)
(72) Inventor: SONG, Mingdong, Shenzhen, Guangdong 518129 (CN); LU, Xuyu, Shenzhen, Guangdong 518129 (CN)
(74) Representative: Epping - Hermann - Fischer
(86) International application number: PCT/CN2023/133475
(87) International publication number: WO 2024/139877

(57) **Abstract**

This application provides an ambient light calibration method and an apparatus, applied to the field of communication technologies, to resolve poor user experience caused by screen dimming effect incapable of matching a current environment. The method includes: obtaining location information of an ambient light sensor; obtaining first ambient light data detected by the ambient light sensor; determining an image matting region based on the location information of the ambient light sensor; performing image matting on layers of a displayed image frame of the terminal device based on the image matting region to obtain matted images corresponding to the layers, and compositing the matted images corresponding to the layers to obtain a screenshot image; and calibrating the first ambient light data based on the screenshot image and screen brightness of the terminal device, to obtain second ambient light data. This application is applied to an ambient light calibration process.

## Description

This application claims priority to Chinese Patent Application No. 202211734474.X, filed with the China National Intellectual Property Administration on December 30, 2022 and entitled "AMBIENT LIGHT CALIBRATION METHOD AND APPARATUS", which is incorporated herein by reference in its entirety.

### TECHNICAL FIELD

This application relates to the field of communication technologies, and in particular, to an ambient light calibration method and an apparatus.

### BACKGROUND

Currently, all terminal devices are equipped with ambient light sensors (ambient light sensors, ALSs) to detect external ambient light data, so that the terminal device automatically adjusts screen brightness based on the ambient light data detected by the ALS. For example, under strong outdoor light, the terminal device automatically adjusts the screen brightness to a high level based on ambient light data detected by the ALS, to adapt to readability under sunlight. After a light is turned off indoors at night, the terminal device automatically decreases the screen brightness based on ambient light data detected by the ALS, to avoid eye strain due to excessively high screen brightness.

However, currently, screen-to-body ratios of terminal devices are increasingly high, and most terminal devices use a bezel-less screen. Therefore, the ALS is moved to a rear side of the screen of the terminal device, and external ambient light is detected through light transmittance of the screen. When the screen is on, the screen (for example, a liquid crystal panel) does not emit light, but light is emitted by a backlight source panel on the rear side of the screen, and the screen changes transmittance of an incident light beam of the backlight source panel based on a voltage, to generate a change in brightness, thereby displaying an image. Therefore, the light beam emitted by the backlight source panel may also be scattered to the ALS. Data detected by the ALS includes not only the external ambient light data, but also intensity of light scattered from the backlight source panel to the ALS. There is an error between the ambient light data detected by the ALS and actual ambient light data. As a result, the detection data is inaccurate. Consequently, screen dimming effect of the terminal device does not match a current environment, affecting user experience.

### SUMMARY

This application provides an ambient light calibration method and an apparatus, to improve accuracy of ambient light data detected by an ambient light sensor.

To achieve the foregoing technical objective, embodiments of this application provide the following technical solutions.

According to a first aspect, an ambient light calibration method is provided. The method includes: A terminal device obtains location information of an ambient light sensor and first ambient light data detected by the ambient light sensor, determines an image matting region based on the location information of the ambient light sensor, performs image matting on layers of a displayed image frame of the terminal device based on the image matting region to obtain matted images corresponding to the layers, composites the matted images corresponding to the layers to obtain a screenshot image, and calibrates the first ambient light data based on the screenshot image and screen brightness of the terminal device, to obtain second ambient light data.

In this way, image matting is performed on the layers of the displayed image frame of the terminal device based on the image matting region determined based on the location information of the ambient light sensor, and then the matted images obtained through image matting are superimposed and composited to obtain the screenshot image, and the ambient light data detected by the ambient light sensor is calibrated based on the screenshot image, so that the terminal device adjusts screen brightness based on calibrated real ambient light data. Therefore, accuracy of screen brightness adjustment is improved, screen dimming effect better matches a current environment, and user experience is improved.

According to the first aspect, in a possible implementation, the determining an image matting region based on the location information of the ambient light sensor includes: determining, based on the location information of the ambient light sensor, a display region that is on a screen of the terminal device and that corresponds to the location information of the ambient light sensor; and determining, based on the display region, the image matting region that is in a displayed image of the terminal device and that corresponds to the display region.

For example, the display region may be a region that is on the screen of the terminal device and that covers the ambient light sensor.

According to the first aspect, in a possible implementation, the performing image matting on layers of a displayed image frame of the terminal device based on the image matting region to obtain matted images corresponding to the layers includes: obtaining the layers of the displayed image frame of the terminal device; and performing image matting on the layers of the displayed image frame of the terminal device based on the image matting region, to obtain the matted images corresponding to the layers.

According to the first aspect, in a possible implementation, the compositing the matted images corresponding to the layers to obtain a screenshot image includes: superimposing and compositing, according to a composition rule, the matted images corresponding to the layers, to obtain the screenshot image, where the composition rule is a composition rule used for compositing the layers to obtain the image frame.

According to the first aspect, in a possible implementation, the calibrating the first ambient light data based on the screenshot image and screen brightness of the terminal device, to obtain second ambient light data includes: determining, based on the screenshot image and the screen brightness of the terminal device, an error in the first ambient light data caused by screen backlight; and obtaining the second ambient light data based on the first ambient light data and the error in the first ambient light data caused by the screen backlight.

According to the first aspect, in a possible implementation, the determining, based on the screenshot image and the screen brightness of the terminal device, an error in the first ambient light data caused by screen backlight includes: calculating luminous intensity of each pixel in the screenshot image based on displayed content of the screenshot image and the screen brightness of the terminal device; determining, based on a distance between each pixel in the screenshot image and the ambient light sensor, an impact weight, on the ambient light sensor, of each pixel in the screenshot image when emitting light; determining, based on the luminous intensity of each pixel in the screenshot image and the impact weight, noise generated by each pixel in the screenshot image; and determining, based on the noise of each pixel in the screenshot image, the error in the first ambient light data caused by the screen backlight.

According to the first aspect, in a possible implementation, the terminal device includes an application processing core and a sensor management core. That a terminal device obtains location information of an ambient light sensor and obtains first ambient light data detected by the ambient light sensor includes: The application processing core obtains the location information of the ambient light sensor from the sensor management core; and the application processing core obtains, from the sensor management core, the first ambient light data detected by the ambient light sensor.

According to the first aspect, in a possible implementation, the terminal device includes an application processing core and a sensor management core. The determining an image matting region based on the location information of the ambient light sensor, performing image matting on layers of a displayed image frame of the terminal device based on the image matting region to obtain matted images corresponding to the layers, compositing the matted images corresponding to the layers to obtain a screenshot image, and calibrating the first ambient light data based on the screenshot image and screen brightness of the terminal device, to obtain second ambient light data includes: The application processing core determines the image matting region based on the location information of the ambient light sensor; the application processing core performs image matting on the layers of the displayed image frame of the terminal device based on the image matting region, to obtain the matted images corresponding to the layers, and composites the matted images corresponding to the layers to obtain the screenshot image; and the application processing core calibrates the first ambient light data based on the screenshot image and the screen brightness of the terminal device, to obtain the second ambient light data.

In this way, in this embodiment of this application, ambient light calibration is completed by the application processing core, there is no need to transmit a screenshot between the application processing core and the sensor management core, and only simple data such as the ambient light data needs to be transmitted, so that system power consumption can be reduced. In addition, in the technical solution of this application, there is no need to transmit the screenshot between the application processing core and the sensor management core. In other words, a data amount transmitted between the application processing core and the sensor management core is small. Therefore, this solution is applicable to both a system-on-chip architecture and a dual-chip architecture, and has higher applicability.

According to a second aspect, a terminal device is provided. The terminal device includes an application processing core and a sensor management core. The application processing core is configured to obtain location information of an ambient light sensor from a sensor core. The ambient light sensor is configured to detect first ambient light data of the terminal device. The application processing core is further configured to obtain, from the sensor management core, the first ambient light data detected by the ambient light sensor. The application processing core is further configured to determine an image matting region based on the location information of the ambient light sensor. The application processing core is further configured to: perform image matting on layers of a displayed image frame of the terminal device based on the image matting region to obtain matted images corresponding to the layers, and composite the matted images corresponding to the layers to obtain a screenshot image. The application processing core is further configured to calibrate the first ambient light data based on the screenshot image and screen brightness of the terminal device, to obtain second ambient light data.

According to a third aspect, an embodiment of this application provides a terminal device. The terminal device has a function of implementing ambient light calibration according to any one of the first aspect and the possible implementations of the first aspect. The function may be implemented by hardware, or may be implemented by hardware executing corresponding software. The hardware or the software includes one or more modules corresponding to the function.

According to a fourth aspect, an embodiment of this application provides a terminal device. The terminal device includes a processor, a memory, a display screen, and an ambient light sensor. The ambient light sensor is configured to detect ambient light data of the terminal device. The processor, the memory, the display screen, and the ambient light sensor are coupled, the memory is configured to store computer program code, the computer program code includes computer instructions, and when the processor reads the computer instructions from the memory, the terminal device is enabled to perform the method according to any one of the first aspect or the implementations of the first aspect.

According to a fifth aspect, an embodiment of this application provides a chip system, including at least one processor and at least one interface circuit. The at least one interface circuit is configured to: perform a transceiver function and send instructions to the at least one processor, and when the at least one processor executes the instructions, the at least one processor performs the method according to any one of the first aspect or the implementations of the first aspect.

According to a sixth aspect, a computer-readable storage medium is provided. The computer-readable storage medium stores a computer program (which may also be referred to as instructions or code). When the computer program is executed by a terminal, the terminal is enabled to perform the method according to any one of the first aspect or the implementations of the first aspect.

According to a seventh aspect, a computer program product is provided. When the computer program product runs on a terminal, the terminal is enabled to perform the method according to any one of the first aspect or the implementations of the first aspect.

For technical effects corresponding to any one of the second aspect to the seventh aspect and the possible implementations of the second aspect to the seventh aspect, refer to technical effects corresponding to any one of the first aspect and the implementations of the first aspect. Details are not described herein again.

### BRIEF DESCRIPTION OF DRAWINGS

FIG. 1 is a diagram of light propagation of a terminal device according to an embodiment of this application;
FIG. 2 is a diagram 1 of a chip architecture of a terminal device according to an embodiment of this application;
FIG. 3 is a diagram 2 of a chip architecture of a terminal device according to an embodiment of this application;
FIG. 4 is a diagram 3 of a chip architecture of a terminal device according to an embodiment of this application;
FIG. 5 is a diagram of a hardware structure of a terminal device according to an embodiment of this application;
FIG. 6 is a schematic flowchart of an ambient light calibration method according to an embodiment of this application;
FIG. 7 is a diagram 1 of an ambient light calibration scenario according to an embodiment of this application;
FIG. 8 is a diagram 2 of an ambient light calibration scenario according to an embodiment of this application;
FIG. 9 is a diagram 3 of an ambient light calibration scenario according to an embodiment of this application;
FIG. 10 is a diagram 4 of an ambient light calibration scenario according to an embodiment of this application;
FIG. 11 is a diagram 5 of an ambient light calibration scenario according to an embodiment of this application;
FIG. 12 is a diagram of an ambient light calibration method applied to a terminal device with a dual-chip architecture according to an embodiment of this application;
FIG. 13 is a timing chart of an ambient light calibration method according to an embodiment of this application; and
FIG. 14 is a diagram of a structure of a terminal device according to an embodiment of this application.

### DESCRIPTION OF EMBODIMENTS

In descriptions of embodiments of this application, "/" indicates "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features.

In the descriptions of embodiments of this application, unless otherwise specified, "a plurality of" means two or more. In embodiments of this application, a term such as "example" or "for example" represents giving an example, an illustration, or a description. Any embodiment or design scheme described as an "example" or "for example" in embodiments of this application should not be explained as being more preferred or having more advantages than another embodiment or design scheme. To be precise, use of the term such as "example" or "for example" is intended to present a related concept in a specific manner.

To clearly describe the technical solutions in embodiments of this application, the following briefly describes some terms and technologies used in embodiments of this application.
1. Illuminance (also referred to as light intensity) is luminous flux of received visible light per unit area. The illuminance indicates intensity of light or an amount of illumination on a surface area of an object. The illuminance is in a unit of lux (lux or lx).
2. An ambient light sensor is a sensing device, and the ambient light sensor may be configured to detect ambient light data, namely, illuminance of ambient light. For example, an ambient light sensor applicable to embodiments of this application may include a photodiode, an analog-to-digital converter (analog-to-digital converter, ADC), a memory, and the like. The photodiode is configured to convert a received optical signal into a current. The ADC is configured to: perform integration on the current from the photodiode, and convert a quantity of electricity obtained through integration of the current into light sensing data indicated by a digital signal.
3. Screen backlight is light that is of a screen and that is shone from a rear side of the screen to a front side of the screen. Backlight is a form of illumination, and is often used for display of a liquid crystal display (liquid crystal display, LCD). The backlight means that a light source shines from a side of the screen or the rear side of the screen. For example, a backlight source panel on the rear side of the screen emits light and shines the light on the screen, to generate the screen backlight.

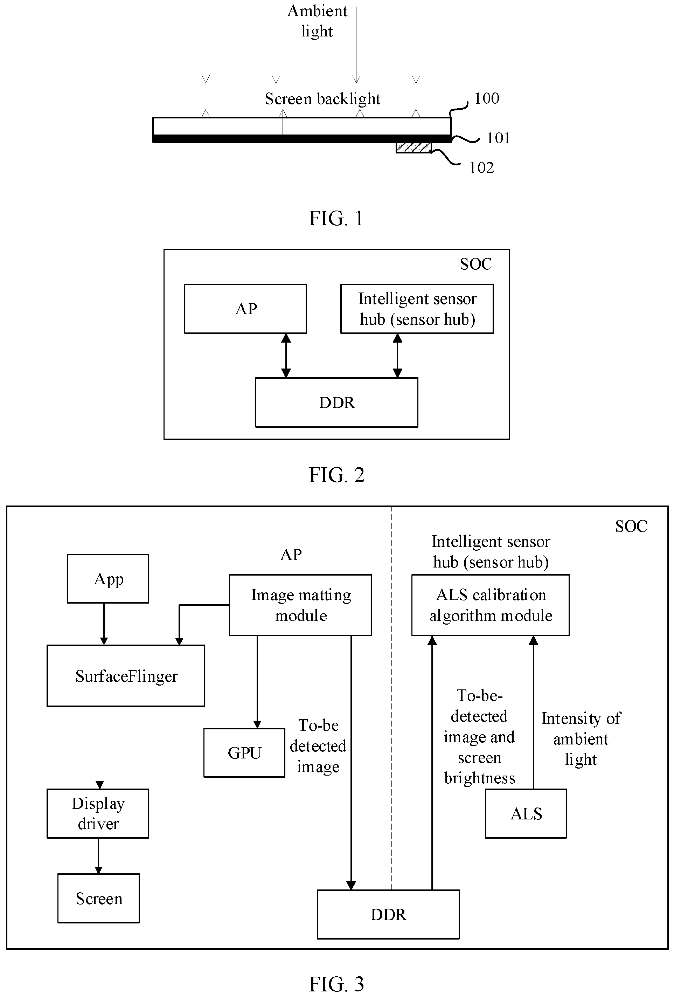

As shown in FIG. 1, a backlight source panel 101 is disposed on a rear side of a screen 100 of a terminal device, and an ambient light sensor 102 is disposed under the screen 100.

In a process of using the terminal device, a power supply of the terminal device supplies power, the backlight source panel 101 emits light to provide backlight for the screen 100, and the screen 100 changes transmittance of an incident light beam of the backlight source panel based on a voltage, to generate a change in brightness, thereby displaying an image. Ambient light may be incident to the ambient light sensor 102 through the screen 100. However, when the backlight source panel 101 emits light to generate the screen backlight, some light is also scattered to the ambient light sensor 102. The screen backlight of the terminal device interferes with detection of the ambient light sensor 302.

Therefore, ambient light data detected by the ambient light sensor 102 includes not only real external ambient light data, but also intensity of light scattered from the backlight source panel 101 to the ambient light sensor 102.

The terminal device adjusts screen brightness based on the ambient light data detected by the ambient light sensor 102 rather than the real ambient light data. Consequently, screen dimming effect does not match a current environment, and user experience is affected.

To improve user experience and obtain real ambient light data by a terminal device, data detected by an ambient light sensor needs to be calibrated to obtain accurate ambient light data.

Currently, a basic architecture of a chip commonly used by a terminal device includes a system-on-chip (system on chip, SoC) architecture and a dual-chip architecture. In addition, when ambient light is calibrated, manners of calibrating the ambient light by terminal devices with different system architectures are different. The following describes in detail different chip architectures of the terminal device and specific implementations of calibrating the ambient light by terminal devices with different system architectures.

FIG. 2 shows a system architecture of a system on chip. The system-on-chip architecture integrates key parts of a system onto a chip. The key parts include a microprocessor, an application processor, an intelligent sensor hub, a graphics processing unit, an analog IP core, a digital IP core, a memory, and the like. The system on chip is an integrated chip, and the application processor (application processor, AP) and the intelligent sensor hub (sensor hub) in the system on chip may interact with each other by using a shared memory, for example, a double data rate (double data rate, DDR) synchronous dynamic random access memory.

As a main core, an AP core is responsible for controlling screen display of a terminal device and running of a main program of the terminal device. As a low-power core, a sensor hub core is responsible for managing a sensor of the terminal device and reading sensor data, for example, reading ambient light data detected by an ALS of the terminal device.

In the system-on-chip architecture shown in FIG. 2, the terminal device with the system-on-chip architecture usually calibrates ambient light in the following manner.

The AP core captures a real-time screenshot of a displayed image of a screen when the screen of the terminal device is on, and transmits the screenshot and real-time screen brightness upon screen-on to the sensor hub core by using the shared memory. The sensor hub calculates, based on the screenshot and the screen brightness transmitted by the AP core, noise generated by screen backlight on the ambient light sensor. The noise may be understood as an impact value of screen backlight caused by light emitting of a backlight source panel of the screen on the ambient light data detected by the ambient light sensor. The ambient light data detected by the ambient light sensor is calibrated based on the noise, so that the terminal device adjusts the screen brightness based on calibrated ambient light data.

For example, as shown in FIG. 3, when the terminal device starts a specific application (application, App), the APP invokes a drawing service such as SurfaceFlinger to send a frame to the screen of the terminal device.

Specifically, the App generates layers of a displayed image frame of the terminal device, and the SurfaceFlinger obtains the layers from the App and invokes an underlying display driver to perform operations such as superimposition, composition, and rendering on the layers, to obtain the displayed image frame, namely, a first image frame. Then, the first image frame is stored in an image buffer (frame buffer) (not shown in the figure), and the display driver sends the first image frame to the screen, so that the first image frame is displayed on the screen of the terminal device.

In a process in which the App sends the image frame to the screen of the terminal device through the SurfaceFlinger, the ALS of the terminal device is started. The ALS detects, at a preset time interval, ambient light data of an environment in which the terminal device is located. An ALS calibration algorithm module of the sensor hub core obtains the ambient light data (for example, an illuminance value of ambient light) detected by the ALS.

When the SurfaceFlinger invokes the display driver to generate the first image frame and send the first image frame to the screen, an image matting module obtains data of the layers in the SurfaceFlinger. Specifically, the image matting module obtains the data of the layers of the displayed image frame that is in the SurfaceFlinger and that is obtained from the App.

Then, the image matting module directly invokes the GPU through an application programming interface (application programming interface, API) provided by the graphics processing unit (graphics processing unit, GPU), and the GPU performs superimposition, rendering, and rasterizing processing on the data of the layers through offline composition, to obtain a second image frame, and returns the second image frame to the image matting module.

After obtaining the second image frame, the image matting module captures an image that is in the second image frame and that corresponds to an ALS region, for example, an image that is in the second image frame and that covers the ALS region.

Then, the image matting module transmits the screenshot and the real-time screen brightness of the terminal device to the ALS calibration algorithm module of the sensor hub core by using the DDR. There has been the ambient light data detected by the ALS in the ALS calibration algorithm module.

The ALS calibration algorithm module determines, based on the screenshot and the real-time screen brightness, the noise generated by scattering of the screen backlight to the ALS.

The ALS calibration algorithm module obtains the calibrated ambient light data based on the read ambient light data detected by the ALS and the noise generated by scattering, to the ALS, of the screen backlight caused by light emitting of the backlight source panel of the screen. The calibrated ambient light data includes only a real value of ambient light around the terminal device, that is, actual ambient light data of the environment in which the terminal device is located.

In addition, the sensor hub core reports the calibrated ambient light data to the AP core (not shown in the figure), so that the AP core accurately adjusts the screen brightness of the terminal device based on the calibrated ambient light data.

However, in the foregoing solution, in a screenshot obtaining process, composition is performed first and then image matting is performed. The GPU is used to perform superimposition and composition again on the data of the layers, to obtain the second image frame, and then a screenshot is captured from the second image frame obtained by performing superimposition and composition again. Offline composition is performed again by the GPU to obtain the image frame. This increases system power consumption and load. In addition, ambient light calibration is performed by the sensor hub core. Therefore, the AP core needs to transmit the screenshot to the sensor hub core. However, transmission of large data such as the screenshot also causes power consumption.

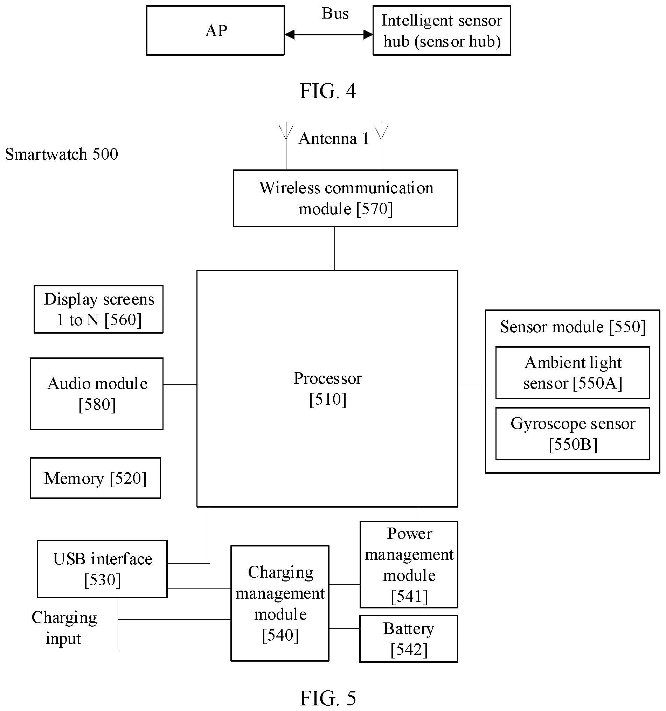

FIG. 4 shows a dual-chip system architecture. In the dual-chip architecture, an AP core and a sensor hub core are two independent chips. The AP core and the sensor hub core are connected through a bus (such as a low-speed bus).

The AP core and the sensor hub core are independent of each other. The AP core controls program running and display of the terminal device, and the sensor hub core is responsible for managing a sensor and reading sensor data.

In the foregoing technical solution for calibrating the ambient light by the terminal device that integrates the system-on-chip architecture, the AP core first composites the layers to obtain an image, and then captures a screenshot of the image, and transmits the screenshot to the sensor hub core by using the shared content. The sensor hub core performs calibration based on the screenshot and the ambient light data detected by the ambient light sensor. In the SoC chip architecture, screenshot generation and screenshot transmission increase the system power consumption and the load.

In addition, the dual-chip architecture uses the low-speed bus to connect the AP core and the sensor hub core. A transmission capability of the low-speed bus is limited, a transmission rate is low, and large data, for example, the screenshot, cannot be transmitted between two chips. Consequently, the solution for calibrating the ambient light by the terminal device with the system-on-chip architecture is applicable only to the terminal device with the system-on-chip architecture, but is not applicable to a terminal device with the dual-chip architecture.

To resolve problems existing in a related technology, embodiments of this application provide an ambient light calibration method. A calibration parameter is obtained, and an image matting region is determined based on location information of an ambient light sensor in the calibration parameter. Ambient light data detected by the ambient light sensor is obtained. Image matting is performed on layers of a displayed image frame of a terminal device based on the image matting region to obtain matted images corresponding to the layers, and the matted images corresponding to the layers are superimposed and composited to obtain a screenshot image. Calibration is performed based on the screenshot image and the ambient light data. In this embodiment of this application, image matting is first performed on the layers of the displayed image frame, and then the matted images obtained through image matting are superimposed and composited to obtain the screenshot image. In this way, system power consumption during environment calibration can be reduced, and calibration is performed based on both the screenshot image and the ambient light data, so that the terminal device adjusts screen brightness of the terminal device based on calibrated ambient light data. Therefore, screen dimming effect of the terminal device can match a real-time environment, and user experience is improved.

In embodiments of this application, the terminal device may be a device with a display function, such as a mobile phone, a smartwatch, a tablet computer, a wearable device, a vehicle-mounted device, or an augmented reality (augmented reality, AR)/virtual reality (virtual reality, VR) device. A specific form of the terminal device is not specifically limited in embodiments of this application.

An example in which the terminal device is a smartwatch is used. FIG. 5 is a diagram of a structure of a smartwatch 500.

The smartwatch 500 may include a processor 510, a memory 520, a universal serial bus (universal serial bus, USB) interface 530, a charging management module 540, a power management module 541, a battery 542, a sensor module 550, a display screen 560, an antenna 1, a wireless communication module 570, an audio module 580, and the like. The sensor module 550 may include an ambient light sensor 550A, a gyroscope sensor 550B, and the like.

It may be understood that the structure shown in this embodiment of the present invention does not constitute a specific limitation on the smartwatch 500. In some other embodiments of this application, the smartwatch 500 may include more or fewer components than those shown in the figure, or some components may be combined, or some components may be split, or there may be a different component arrangement. The components shown in the figure may be implemented by hardware, software, or a combination of software and hardware.

The processor 510 may include one or more processing units. For example, the processor 510 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a display processing unit (display processing unit, DPU), a coprocessor such as an intelligent sensor hub (sensor hub), and/or a neural network processing unit (neural network processing unit, NPU). Different processing units may be independent components, or may be integrated into one or more processors.

In some embodiments of this application, the sensor hub may include a plurality of drivers for controlling sensors. For example, the sensor hub includes a driver for controlling the ambient light sensor, and the sensor hub may control the ambient light sensor by using the driver.

The controller may be a decision maker that directs components of the smartwatch 500 to work coordinately based on an instruction, and is a nerve center and a command center of the smartwatch 500. The controller generates an operation control signal based on instruction operation code and a time sequence signal, to complete control of instruction fetching and instruction execution.

A memory may be further disposed in the processor 510, and is configured to store instructions and data. In some embodiments, the memory in the processor 510 is a cache. The memory may store instructions or data that has been recently used or cyclically used by the processor 510. If the processor 510 needs to use the instructions or the data again, the processor 510 may directly invoke the instructions or the data from the memory. This avoids repeated access, reduces a waiting time of the processor 510, and therefore improves system efficiency.

In some embodiments, the processor 510 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment of the present invention is merely an example for description, and does not constitute a limitation on the structure of the smartwatch 500. In some other embodiments of this application, the smartwatch 500 may alternatively use an interface connection manner different from that in the foregoing embodiment, or a combination of a plurality of interface connection manners.

The memory 520 may be configured to store computer-executable program code. The executable program code includes instructions. The memory 520 may include a program storage region and a data storage region. The program storage region may store an operating system, an application required by at least one function (for example, a voice playing function or an image playing function), and the like. The data storage region may store data (for example, audio data or an address book) created during use of the smartwatch 500, and the like.

In addition, the memory 520 may include a high-speed random access memory, or may further include a non-volatile memory, for example, at least one magnetic disk storage device, a flash memory, or a universal flash storage (universal flash storage, UFS). The processor 510 runs the instructions stored in the memory 520 and/or the instructions stored in the memory disposed in the processor, to implement various function applications and data processing of the smartwatch 500.

The universal serial bus interface 530 may be a mini USB interface, a micro USB interface, a USB type-C interface, or the like. The USB interface may be configured to connect to a charger to charge the smartwatch 500, or may be configured to transmit data between the smartwatch 500 and a peripheral device, or may be configured to connect to a headset for playing audio through the headset.

The charging management module 540 is configured to receive a charging input from the charger. The charger may be a wireless charger or a wired charger. In some embodiments of wired charging, the charging management module 540 may receive a charging input from the wired charger through the USB interface 530. In some embodiments of wireless charging, the charging management module 540 may receive a wireless charging input through a wireless charging coil of the smartwatch 500. When charging the battery 542, the charging management module 540 may further supply power to the terminal device by using the power management module 541.

The power management module 541 is configured to connect to the battery 542, the charging management module 540, and the processor 510. The power management module 541 receives an input from the battery 542 and/or the charging management module 540, and supplies power to the processor 510, an internal memory 121, the display screen 560, the wireless communication module 570, and the like.

The power management module 541 may be further configured to monitor parameters such as a battery capacity, a battery cycle count, and a battery health status (electric leakage or impedance). In some other embodiments, the power management module 541 may alternatively be disposed in the processor 510. In some other embodiments, the power management module 541 and the charging management module 540 may alternatively be disposed in a same component.

The ambient light sensor 550A may detect intensity of ambient light around the smartwatch 500, so that the smartwatch 500 automatically adjusts brightness of the display screen 560 based on detection data of the ambient light sensor 550A.

The gyroscope sensor 550B may be configured to determine a motion posture of the smartwatch 500. In some embodiments, angular velocities of the smartwatch 500 around three axes (namely, axes x, y, and z) may be determined by using the gyroscope sensor 550B. The gyroscope sensor 550B may be configured to implement image stabilization during photographing. For example, when a shutter is pressed, the gyroscope sensor 550B detects an angle at which the smartwatch 500 shakes, calculates, based on the angle, a distance for which a lens module needs to compensate, and allows a lens to cancel the shake of the smartwatch 500 through reverse motion, to implement the image stabilization. The gyroscope sensor 550B may be further used in a navigation scenario and a somatic game scenario.

The sensor module 550 of the smartwatch 500 may further include a pressure sensor, a distance sensor, a fingerprint sensor, a temperature sensor, a touch sensor, and the like.

A wireless communication function of the smartwatch 500 may be implemented by using the antenna 1, the wireless communication module 570, the modem processor, the baseband processor, and the like.

The antenna 1 is configured to transmit and receive an electromagnetic wave signal. Each antenna in the smartwatch 500 may be configured to cover one or more communication frequency bands. Different antennas may be further reused, to improve antenna utilization. In some other embodiments, the antenna may be used in combination with a tuning switch.

The smartwatch 500 implements a display function through the GPU, the display screen 560, the application processor, and the like. The GPU is a microprocessor for image processing, and is connected to the display screen 560 and the application processor. The GPU is configured to: perform mathematical and geometric computation and render an image. The processor 510 may include one or more GPUs that execute program instructions to generate or change display information.

The display screen 560 is configured to display an image, a video, and the like. The display screen 560 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the smartwatch 500 may include one or N display screens 560, where N is a positive integer greater than 1.

The wireless communication module 570 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like and that is applied to the smartwatch 500. The wireless communication module 570 may be one or more components integrating at least one communication processor module. The wireless communication module 570 receives an electromagnetic wave through the antenna 1, performs frequency modulation and filtering processing on an electromagnetic wave signal, and sends a processed signal to the processor 510. The wireless communication module 570 may further receive a to-be-sent signal from the processor 510, perform frequency modulation and amplification on the signal, and convert the signal into an electromagnetic wave for radiation through the antenna 1.

The audio module 580 is configured to convert digital audio information into an analog audio signal for output, and is also configured to convert analog audio input into a digital audio signal. The audio module 580 may be further configured to encode and decode an audio signal. In some embodiments, the audio module 580 may be disposed in the processor 510, or some functional modules of the audio module 580 are disposed in the processor 510.

Certainly, the smartwatch 500 may further include another functional unit. This is not limited in embodiments of this application.

The following uses the architecture shown in FIG. 5 as an example to describe the method provided in embodiments of this application. Units in the following embodiments may have components shown in FIG. 5. Details are not described again. It should be noted that, in embodiments of this application, names of messages exchanged between devices, names of parameters in the messages, or the like are merely examples. Other names may alternatively be used during specific implementation. In embodiments of this application, generating (generate) may also be understood as creating (create) or determining, and "include" in embodiments of this application may also be understood as "carry". This is uniformly described herein. This is not specifically limited in embodiments of this application.

The ambient light calibration method provided in embodiments of this application may be applied to any terminal device including the smartwatch shown in FIG. 5.

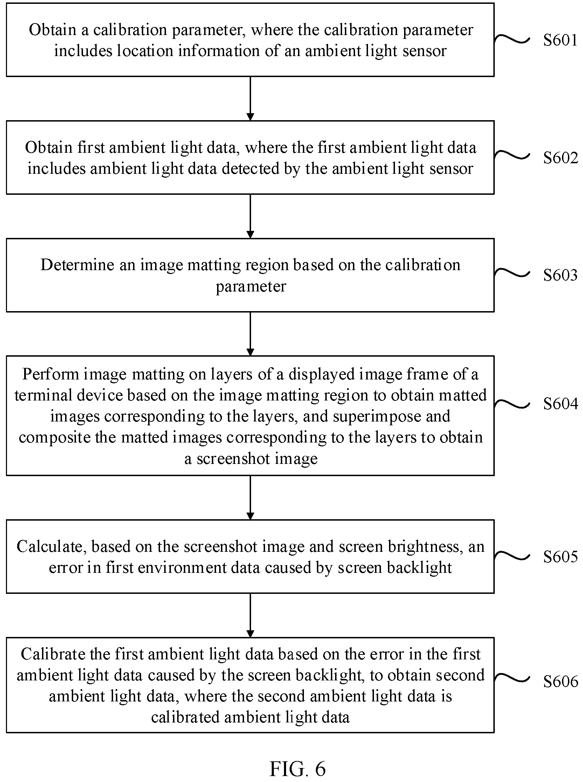

In some embodiments of this application, FIG. 6 is a schematic flowchart of an ambient light calibration method according to an embodiment of this application. The method may be applied to a terminal device with a SoC chip architecture, or may be applied to a terminal device with a dual-chip architecture. The method includes the following steps.

S601: Obtain a calibration parameter, where the calibration parameter includes location information of an ambient light sensor.

In some embodiments of this application, an AP core obtains, from a sensor hub core, the calibration parameter that includes the location information of the ambient light sensor. The calibration parameter may further include a model, an identifier, and the like of the ambient light sensor.

For example, the AP core sends a calibration parameter obtaining request to the sensor hub core. In response to the calibration parameter obtaining request, the sensor hub core returns the calibration parameter.

Optionally, the AP core stores the calibration parameter in an image matting and calibration module for subsequent ambient light calibration.

S602: Obtain first ambient light data, where the first ambient light data includes ambient light data detected by the ambient light sensor.

In some embodiments of this application, after a screen of a smartwatch is on, an ambient light sensor of the smartwatch detects, at a preset time interval, ambient light data of an environment in which the smartwatch is located. An AP core of the smartwatch obtains the first ambient light data from a sensor hub core within a collection period of the ambient light sensor, and stores the first ambient light data in a sensor hardware abstraction layer (hardware abstract layer, HAL), that is, a sensor hal, so that the AP core subsequently performs ambient light calibration based on the obtained first ambient light data.

The collection period is a period, preset by the smartwatch, within which the ambient light sensor collects the ambient light data. For example, if the collection period is 1 second, the ambient light sensor collects ambient light data every 100 milliseconds. The collection period may also be understood as a time interval at which the AP core receives the ambient light data sent by the sensor hub core, for example, a time period from a first time for which the AP core receives the ambient light data sent by the sensor hub core to a second time for which the AP core receives the ambient light data sent by the sensor hub core.

Optionally, the first ambient light data includes the ambient light data that is detected by the ambient light sensor and that is of the environment in which the terminal device is located.

Optionally, the first ambient light data further includes a sensor channel identifier and corresponding light intensity. The ambient light sensor includes a plurality of channels (usually four channels). When the ambient light sensor detects ambient light, the channels detect respective ambient light data. The ambient light sensor performs a preset operation by integrating the ambient light data detected by the plurality of channels, to obtain the ambient light data detected by the ambient light sensor. The preset operation may be an addition operation.

In a possible implementation, a specific implementation in which the AP core obtains the first ambient light data from the sensor hub core within the collection period may be: triggering, after the screen of the smartwatch is on, the ambient light sensor to perform ambient light detection. At a start time of the collection period, the AP core listens to the sensor hub core in real time, and sends a first ambient light data obtaining request to the sensor hub core after it is detected, through listening, that the sensor hub core reads the ambient light data detected by the ambient light sensor of the terminal device. The sensor hub core integrates the ambient light data detected by the ambient light sensor and related information of the ambient light sensor into the first ambient light data based on the first ambient light data obtaining request, and returns the first ambient light data to the AP core.

In another possible implementation, a specific implementation in which the AP core obtains the first ambient light data from the sensor hub core within the collection period may be: triggering, after the screen of the smartwatch is on, the ambient light sensor to read the ambient light data. At the start time of the collection period, the sensor hub core reads data detected by each sensor in real time. After reading the ambient light data detected by the ambient light sensor, the sensor hub core integrates the ambient light data detected by the ambient light sensor and the related information of the ambient light sensor into the first ambient light data, and sends the first ambient light data to the AP core. In this way, the AP core obtains the first ambient light data.

In still another possible implementation, a specific implementation in which the AP core obtains the first ambient light data from the sensor hub core within the collection period may be: sending, by the AP core, indication information to the sensor hub core in advance before the collection period starts. The indication information indicates the sensor hub core to integrate, after reading the ambient light data detected by the ambient light sensor, the ambient light data and the related information of the ambient light sensor into the first ambient light data and send the first ambient light data to the AP core.

S603: Determine an image matting region based on the calibration parameter.

In this embodiment of this application, the image matting and calibration module of the AP core determines, based on the location information of the ambient light sensor in the calibration parameter, a display region that is on the screen of the terminal device and that corresponds to the location information of the ambient light sensor. The display region may be a region that is on the screen of the terminal device and that covers the ambient light sensor. Then, an image matting region that is in a displayed image frame of the terminal device and that corresponds to the display region is determined based on the display region on the screen.

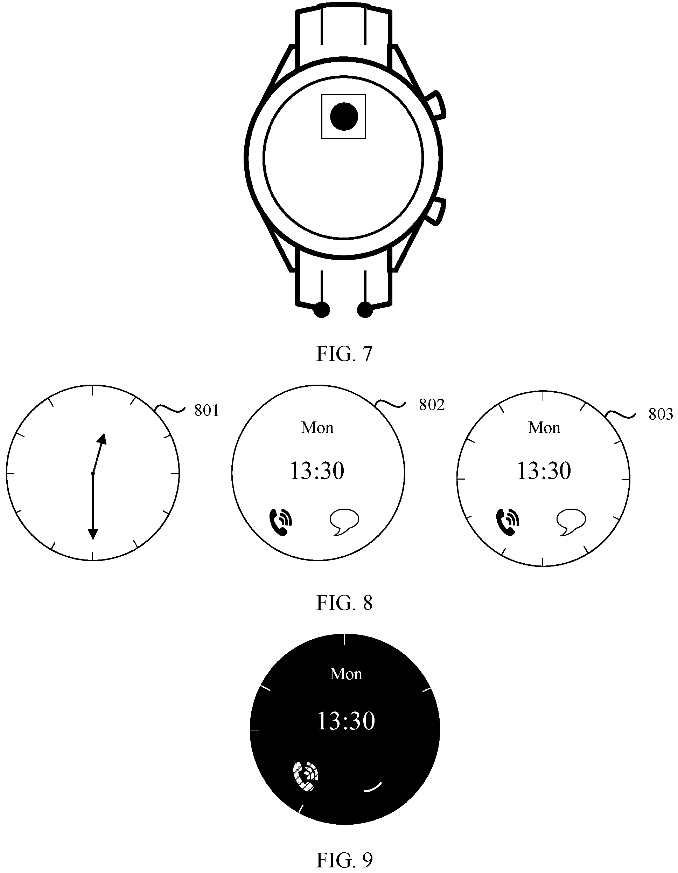

In this embodiment of this application, the AP core of the terminal device obtains the calibration parameter sent by the sensor hub core. FIG. 7 is a diagram of a structure of the ambient light sensor of the smartwatch. A black circular region in FIG. 7 is the ambient light sensor. The AP core first determines, based on the location information of the ambient light sensor in the calibration parameter, the display region that is on the screen and that corresponds to the location information, and then determines, based on the display region, the image matting region that is in the displayed image frame of the terminal device and that corresponds to the display region. For example, a square region in FIG. 7 may be understood as the display region that is on the screen and that is determined based on the location information of the ambient light sensor. In addition, the square region is also the image matting region that is in the displayed image frame of the terminal device and that corresponds to the display region.

In some embodiments of this application, a specific implementation of determining the image matting region based on the location information of the ambient light sensor in the calibration parameter includes: determining an image matting region of a preset size by using a pixel corresponding to the location information of the ambient light sensor as a center point of the image matting region.

For example, the pixel corresponding to the location information of the ambient light sensor is used as a center, to first determine a square display region of 100* 100 pixels centered on the pixel on the screen. A square image matting region of 100* 100 pixels that is in the displayed image frame and that corresponds to the display region is determined based on the square display region.

For another example, the location information of the ambient light sensor is used as a circle center and a preset distance is used as a radius, to determine a circular display region on the screen with the location information as the circle center and the preset distance as the radius. A circular image matting region that is in the displayed image frame and that corresponds to the circular display region is determined based on the circular display region.

S604: Perform image matting on layers of the displayed image frame of the terminal device based on the image matting region to obtain matted images corresponding to the layers, and superimpose and composite the matted images corresponding to the layers to obtain a screenshot image.

Optionally, performing image matting on the layers of the displayed image frame of the terminal device based on the image matting region to obtain the matted images corresponding to the layers, and performing composition based on the matted images corresponding to the layers to obtain the screenshot image may be applied to a process in which an App sends an image frame to the screen.

In this embodiment of this application, when the smartwatch starts a specific App, the App generates layers of a displayed image frame of the smartwatch, and sends the layers to SurfaceFlinger. The SurfaceFlinger invokes an underlying display driver to superimpose and composite the layers to obtain the displayed image frame, and then the display driver sends the displayed image frame to the screen. In addition, the image matting and calibration module obtains the layers of the displayed image frame from the display driver, and performs image matting on the layers based on the image matting region to obtain the matted images corresponding to the layers, and then superimposes and composites the matted images corresponding to the layers according to a composition rule to obtain the screenshot image. The composition rule is a composition rule used for the display driver to composite the layers to obtain the displayed image frame.

FIG. 8 is a diagram of compositing layers to obtain an image frame of a lock screen interface on a smartwatch, for example, in a process in which a user taps a screen of the smartwatch and the smartwatch displays the lock screen interface. The SurfaceFlinger in the smartwatch obtains the layers, including a background layer 801 and a lock screen icon layer 802, of the displayed image frame of the lock screen interface of the terminal device.

Then, the display driver composites the plurality of layers according to the rule, for example, changing transparency of the layers. For example, transparency of a pointer part on the background layer 801 is set to 0, transparency of a remaining part is set to 1, and transparency of the lock screen icon layer 802 is set to 1. In this way, a displayed image frame 803 in which a lock screen icon is displayed on a middle part and a pointer is not displayed is obtained. The displayed image frame 803 is presented on an interface of the smartwatch, to present the lock screen interface.

FIG. 9 shows an actually displayed interface corresponding to the displayed image frame 803 of the lock screen interface in FIG. 8. When the lock screen interface is on, in FIG. 8, a background color of the lock screen interface is black, colors of a watch face, "Mon", "13:30", and an SMS message icon are white, and a color of a phone icon is gray. In addition, to highlight time and day of the week, transparency of "Mon" and "13:30" is set to 0, and transparency of the watch face and the SMS message icon is set to 50%.

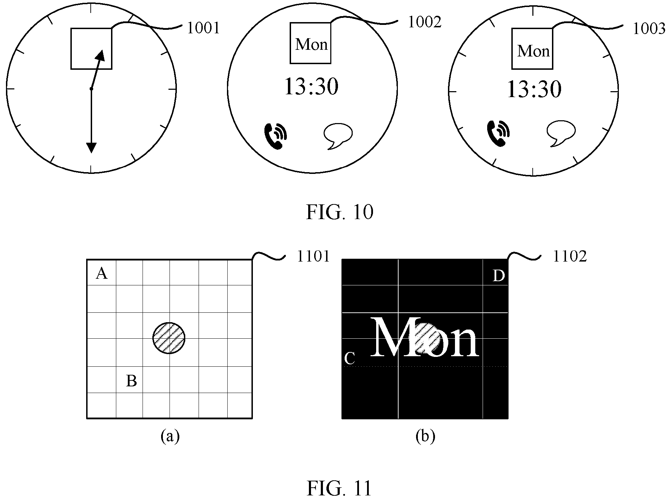

For example, the structure of the ambient light sensor of the smartwatch and the lock screen interface of the smartwatch shown in FIG. 7 and FIG. 8 are used as examples. FIG. 10 is a diagram of compositing the matted images of the layers of the displayed image frame to obtain the screenshot image according to an embodiment of this application. In a process in which the smartwatch displays the lock screen interface, the AP core captures the corresponding matted images in the background layer 701 and the lock screen icon layer 702 based on the square image matting region, to obtain a matted image 1001 of the background layer and a matted image 1002 of the lock screen icon layer respectively. A plurality of matted images (for example, 1001 and 1002) are superimposed and composited to obtain a screenshot image 1003.

S605: Calculate, based on the screenshot image and screen brightness, an error in the first ambient light data caused by screen backlight.

In some embodiments of this application, the AP core calculates luminous intensity of each pixel in the screenshot image based on displayed content of the screenshot image and the screen brightness of the terminal device, determines, based on a distance between each pixel in the screenshot image and the ambient light sensor, an impact weight, on the ambient light sensor, of each pixel in the screenshot image when emitting light, determines, based on the luminous intensity of each pixel in the screenshot image and the impact weight, noise generated by each pixel in the screenshot image, and obtains, based on the noise of each pixel in the screenshot image, the error in the first ambient light data caused by the screen backlight.

It may be understood that actual luminous intensity of each pixel in the terminal device relates to content displayed on the screen of the terminal device.

Based on the example of the lock screen interface actually displayed by the smartwatch in FIG. 9, it can be learned that, when the lock screen interface of the smartwatch is on, although screen brightness of the lock screen interface is consistent (for example, the screen brightness is preset brightness, or the screen brightness is brightness customized and adjusted by the user), the actual luminous intensity of each pixel on the screen is different based on specific content displayed on the lock screen interface of the smartwatch. Luminous intensity of each pixel in a black background region is lower than luminous intensity of each pixel in the watch face and the SMS message icon, and is much lower than luminous intensity of each pixel in "Mon", "13:30", and the phone icon. In addition, the luminous intensity of each pixel is different for different colors.

In some embodiments of this application, a specific implementation of calculating the luminous intensity of each pixel in the screenshot image is: determining the luminous intensity of the pixel based on a color of the pixel and the screen brightness.

It may be understood that the screenshot image is an image that covers the ambient light sensor, and light emitting of any pixel in the screenshot image may affect the ambient light data detected by the ambient light sensor. When a pixel that is relatively close to the ambient light sensor emits light, a degree of impact on the detection data of the ambient light sensor is relatively great. When a pixel that is relatively far away from the ambient light sensor emits light, a degree of impact on the detection data of the ambient light sensor is relatively small. Therefore, based on the distance from each pixel to the ambient light sensor, the impact weight on the detection data of the ambient light sensor when the pixel emits light is determined.

In some embodiments of this application, a specific implementation of determining, based on the luminous intensity of each pixel in the screenshot image and the impact weight, the noise generated by each pixel in the screenshot image is: performing a preset operation on the luminous intensity of each pixel and the impact weight, to obtain the noise generated by each pixel. The preset operation may be a multiplication operation.

For example, FIG. 11 is a diagram of each pixel in the screenshot image according to an embodiment of this application. To clearly demonstrate a degree of impact of each pixel on the ambient light sensor, no content is displayed in the screenshot image shown in (a) in FIG. 11. (b) in FIG. 11 is a diagram of each pixel in the screenshot image that is determined based on the actually displayed interface in FIG. 9 and the screenshot image 1003 in FIG. 10.

A square 1101 in (a) in FIG. 11 is the screenshot image, and each small square represents each pixel in the screenshot image, for example, a pixel A and a pixel B. A gray circular region is the ambient light sensor. Based on distances from the pixel A and the pixel B to the ambient light sensor, degrees of impact of light emitting of the pixels on the ambient light sensor are determined. If the distance from the pixel A to the ambient light sensor is long, an impact weight of light emitting of the pixel A on the detection data of the ambient light sensor is 10%. If the distance from the pixel B to the ambient light sensor is short, an impact weight of light emitting of the pixel B on the detection data of the ambient light sensor is 40%.

If luminous intensity of the pixel A is 1, and the impact weight of affecting the detection data of the ambient light sensor is 10%, noise generated by the pixel A is: 1*10% = 0.1. If luminous intensity of the pixel B is 2, and the impact weight of affecting the detection data of the ambient light sensor is 40%, noise generated by the pixel B is: 2*40% = 0.8. Therefore, the noise generated by each pixel in the screenshot image is calculated.

A square 1102 in (b) in FIG. 11 is an actually displayed image of the screenshot image 1003 that is determined based on the actually displayed interface in FIG. 8 and the screenshot image 1003 in FIG. 10. A background color of the actually displayed image is black, and "Mon" is displayed in white in the middle. Each small square represents each pixel in the actually displayed image, for example, a pixel C and a pixel D (the two letters C and D are not displayed in the actually displayed image). A gray circular region is the ambient light sensor (in this example, to clearly indicate the distance from each pixel to the ambient light sensor, the gray circular region is used to indicate the ambient light sensor. During actual application, the gray circular region is not displayed in the actually displayed image).

For each pixel in the actually displayed image, luminous intensity of the pixel is determined based on displayed content of the pixel and the screen brightness. For example, a partial region of the pixel C is black and a partial region is white. In this case, luminous intensity is determined as 5 based on displayed content of the pixel C and the screen brightness. The whole pixel D is black. In this case, luminous intensity is determined as 1 based on displayed content of the pixel D and the screen brightness.

Then, based on the distance between each pixel and the ambient light sensor, a degree of impact of light emitting of the pixel on the ambient light sensor is determined. For example, an impact weight of light emitting of the pixel C on detection of the ambient light sensor is 20%, and an impact weight of light emitting of the pixel D on the detection of the ambient light sensor is 10%.

Finally, based on the luminous intensity and the impact weight of each pixel, the noise generated by the pixel during the detection of the ambient light sensor is determined. Specifically, noise generated by the pixel C during the detection of the ambient light sensor is: 5*20% = 1, and noise generated by the pixel D during the detection of the ambient light sensor is: 1*10% = 0.1.

In some embodiments of this application, a specific implementation of obtaining, based on the noise of each pixel in the screenshot image, the error in the first ambient light data caused by the screen backlight is: calculating, through integral accumulation, the noise generated by each pixel during the detection of the ambient light sensor, to obtain the error in the first ambient light data caused by the screen backlight.

For example, based on the example in (b) in FIG. 11, noise generated by the pixel C, the pixel D, and another pixel during the detection of the ambient light sensor is calculated through integral accumulation, to obtain the error in the first ambient light data caused by the screen backlight.

Optionally, after calculating the error in the first ambient light data caused by the screen backlight, the AP core feeds back the error in the first ambient light data caused by the screen backlight to the sensor hal. In this way, when obtaining ambient light data sent by a sensor hub next time, the sensor hal performs initial calibration on the ambient light data based on the error in the first ambient light data caused by the screen backlight.

S606: Calibrate the first ambient light data based on the error in the first ambient light data caused by the screen backlight, to obtain second ambient light data, where the second ambient light data is calibrated ambient light data.

In this embodiment of this application, after obtaining the error in the first ambient light data caused by the screen backlight, the AP core performs a preset operation on the error in the first ambient light data caused by the screen backlight and the first ambient light data, to obtain calibrated ambient light data, namely, the second ambient light data. The preset operation may be a subtraction operation.

For example, the second ambient light data is obtained by subtracting, from the first ambient light data, the error in the first ambient light data caused by the screen backlight. The second ambient light data is real ambient light data obtained after screen backlight interference data is subtracted.

Optionally, the AP core reports the second ambient light data to the terminal device, and the terminal device adjusts the screen brightness based on the second ambient light data, to help the screen brightness adapt to an ambient environment.

Optionally, after obtaining the error in the first ambient light data caused by the screen backlight and the calibrated ambient light data (the second ambient light data), the AP core sends the error in the first ambient light data caused by the screen backlight and the second ambient light data to the sensor hub core, to help the sensor hub core to update data detected by the ambient light sensor and help a calibration algorithm of the sensor hub core to verify the calibrated data.

In this embodiment of this application, in a screenshot obtaining process, image matting is performed first and then composition is performed. An image matting module obtains the layers of the image frame from the display driver, first performs image matting on the layers based on the image matting region, to obtain image matting regions corresponding to the layers, and then superimposes and composites the image matting regions corresponding to the layers, to obtain a to-be-detected screenshot. In this application, the layers of the image frame are directly obtained from the underlying display driver. There is no need to obtain the layers from the SurfaceFlinger, and then invoke a GPU to perform superposition and composition again on the layers to obtain the image frame, and finally perform image matting on a layer frame, so that system power consumption and system load can be reduced.

In addition, in this application, the AP core performs ambient light calibration. The sensor hub core only needs to send the calibration parameter and the data detected by the ambient light sensor to the AP core. The AP core performs image matting and performs ambient light calibration based on the data sent by the sensor hub core. There is no need to transmit large data such as the screenshot between the AP core and the sensor hub core, and therefore the power consumption can be further reduced. This solution is applicable to both a system-on-chip architecture and a dual-chip architecture, and has higher applicability.

The following describes, with reference to a terminal device with a dual-chip system architecture, an ambient light calibration method provided in an embodiment of this application.

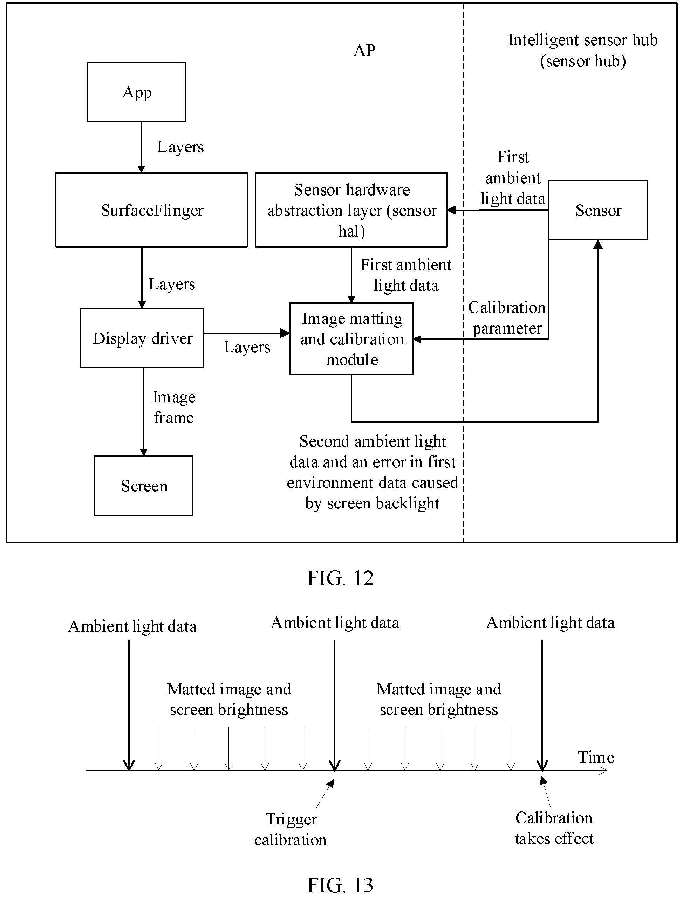

As shown in FIG. 12, in the method, an image matting and calibration module of an AP core obtains a calibration parameter of a sensor module of a sensor hub core. The calibration parameter includes location information of an ambient light sensor. When a specific App in a terminal device is started and the terminal device turns on a screen display, SurfaceFlinger sends layers generated by the App to a display driver. The display driver superimposes and composites the layers by using hardware, to obtain a displayed image frame. In addition, the image matting and calibration module obtains the layers from the display driver, performs image matting on the layers based on an image matting region determined based on the calibration parameter to obtain matted images corresponding to the layers, and superimposes and composites the matted images to obtain a screenshot image.

In some embodiments of this application, the image matting and calibration module may further obtain the layers from the SurfaceFlinger.

When the terminal device turns on the screen display, the ambient light sensor of the terminal device is started, to identify and detect ambient light data of an ambient environment of the terminal device. The sensor hub core reads detection data of each sensor. After reading the ambient light sensor detected by the ambient light sensor, the sensor hub core integrates the ambient light data detected by the ambient light sensor and related information of the ambient light sensor into first ambient light data, and sends the first ambient light data to a sensor hal of the AP core. Then, the sensor hal sends the first ambient light data to the image matting and calibration module.

Subsequently, the image matting and calibration module calculates, based on the screenshot image and screen brightness, an error in the first ambient light data caused by screen backlight. Second ambient light data is obtained based on the first ambient light data and the error in the first ambient light data caused by the screen backlight. The second ambient light data is calibrated ambient light data.

The AP core feeds back the second ambient light data and the error in the first ambient light data caused by the screen backlight to the sensor hub core, so that the sensor hub core updates data in time, to improve accuracy of subsequent detection.

In this embodiment of this application, the AP core completes screenshot capturing, calculating the error in the first ambient light data caused by the screen backlight, and calibrating the ambient light data. In this way, there is no need to transmit the screenshot between the AP core and the sensor hub core, and a sensor hub core chip does not need to participate in calibration. In addition, in a calibration process, image matting is first performed on the layers, and then composition is performed on the matted images of the layers to obtain the screenshot image. The screenshot image is merely a small part of a full-screen image. This reduces power consumption of the device, improves device performance, and has higher applicability.

In this application, the AP core performs ambient light calibration. The sensor hub core only needs to send the calibration parameter and the data detected by the ambient light sensor to the AP core. The AP core performs image matting and performs ambient light calibration based on the data sent by the sensor hub core. There is no need to transmit large data such as the screenshot between the AP core and the sensor hub core, and therefore the power consumption can be further reduced. This solution is applicable to both a system-on-chip architecture and a dual-chip architecture, and has higher applicability.

For example, FIG. 13 is a timing chart of an ambient light calibration method according to an embodiment of this application.

The sensor hub core reads the ambient light data detected by the ambient light sensor for the first time, sends the ambient light data to the AP core, and stores the data in the sensor hal. The AP core receives the ambient light data sent by the sensor hub core and then performs calibration. However, to ensure timeliness of the ambient light data, in a process in which the AP core performs image matting and calculates, based on a matted image and the screen brightness, the error in the first ambient light data caused by the screen backlight, the ambient light data has been sent to the terminal device, and the first ambient light data is not calibrated.

Then, the sensor hub core sends the ambient light data detected by the ambient light sensor to the AP core. In a time period in which the sensor hub core sends ambient light data to the AP core twice, the AP core continuously collects matted images, and calculates, at a pixel level, noise generated by each frame of matted images on the ambient light sensor. Therefore, the error in the first ambient light data caused by the screen backlight in the time period is calculated. When ambient light data sent by the sensor hub core is obtained next time, the ambient light data is calibrated based on the error in the first ambient light data caused by the screen backlight.

In some solutions, a plurality of embodiments of this application may be combined, and a combined solution is implemented. Optionally, some operations in procedures of the foregoing method embodiments are randomly combined, and/or a sequence of some operations is randomly changed. In addition, an execution sequence between steps of each procedure is merely an example, and does not constitute a limitation on an execution sequence between the steps. The steps may alternatively be performed in another execution sequence. It is not intended to indicate that the execution order is the only order in which these operations can be performed. A person of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

Moreover, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

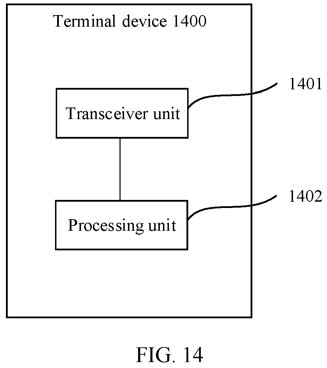

The foregoing describes in detail the ambient light calibration method provided in embodiments of this application with reference to FIG. 6 to FIG. 13. The following describes in detail a terminal provided in an embodiment of this application with reference to FIG. 14.

In a possible design, FIG. 14 is a diagram of a structure of a terminal device according to an embodiment of this application. As shown in FIG. 14, a terminal device 1400 may include a transceiver unit 1401 and a processing unit 1402. The terminal 1400 may be configured to implement functions of the terminal device in the foregoing method embodiments.

Optionally, the processing unit 1402 is configured to support the terminal device 1400 to perform S601, S602, S603, S604, S605, and S606 in FIG. 6.

The transceiver unit 1401 may include a receiving unit and a sending unit, may be implemented by a transceiver or a transceiver-related circuit component, and may be a transceiver or a transceiver module.

Optionally, the terminal device 1400 shown in FIG. 14 may further include a storage unit (not shown in FIG. 14), and the storage unit stores a program or instructions. When the transceiver unit 1401 and the processing unit 1402 execute the program or the instructions, the terminal device 1400 shown in FIG. 14 is enabled to perform the ambient light calibration method in the foregoing method embodiments.

Operations and/or functions of the units in the terminal device 1400 are separately intended to implement corresponding procedures of the ambient light calibration method in the foregoing method embodiments. All related content of the steps in the foregoing method embodiments may be cited to function descriptions of corresponding functional units. For brevity, details are not described herein again.

For technical effects of the terminal device 1400 shown in FIG. 14, refer to the technical effects of the ambient light calibration method in the foregoing method embodiments. Details are not described herein again.

In addition to a form of the terminal device 1400, the technical solutions provided in this application may also be a functional unit or a chip in the terminal, or an apparatus that is used with the terminal.

An embodiment of this application further provides a chip system. The chip system includes a processor, the processor is coupled to a memory, and the memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory (read-only memory, ROM). The memory and the processor may be integrated on a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of the hardware in the processor and a software module.

An embodiment of this application further provides a computer-readable storage medium. The computer-readable storage medium stores a computer program. When the computer program is run on a computer, the computer is enabled to perform the foregoing related steps, to implement the ambient light calibration method in the foregoing embodiments.

An embodiment of this application further provides a computer program product. When the computer program product runs on a computer, the computer is enabled to perform the foregoing related steps, to implement the ambient light calibration method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by one or more processors, the apparatus is enabled to perform the ambient light calibration method in the foregoing method embodiments.

The apparatus, the computer-readable storage medium, the computer program product, or the chip provided in embodiments of this application is configured to perform the corresponding method provided above. Therefore, for beneficial effects that can be achieved by the apparatus, the computer-readable storage medium, the computer program product, or the chip, refer to beneficial effects in the corresponding method provided above. Details are not described herein again.

Methods or algorithm steps described in combination with the content disclosed in embodiments of this application may be implemented by hardware, or may be implemented by a processor by executing software instructions. The software instructions may include a corresponding software module. The software module may be stored in a random access memory (random access memory, RAM), a flash memory, a read-only memory, an erasable programmable read-only memory (erasable programmable read-only memory, EPROM), an electrically erasable programmable read-only memory (electrically erasable programmable read-only memory, EEPROM), a register, a hard disk, a removable hard disk, a compact disc read-only disk (compact disc read-only memory, CD-ROM), or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an application-specific integrated circuit (application-specific integrated circuit, ASIC).

Based on the descriptions in the foregoing implementations, a person skilled in the art may clearly understand that, for a purpose of convenient and brief description, division into the foregoing functional modules is merely used as an example for illustration. During actual application, the foregoing functions may be allocated to different functional modules and implemented as required. In other words, an inner structure of an apparatus is divided into different functional modules to implement all or some of the functions described above. For a detailed working process of the foregoing system, apparatus, and unit, refer to a corresponding process in the foregoing method embodiments. Details are not described herein again.

In the several embodiments provided in this application, it should be understood that the disclosed methods may be implemented in another manner. The foregoing described apparatus embodiment is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in an electrical, mechanical, or another form.

Moreover, functional units in embodiments of this application may be integrated into one processing unit, or each of the units may exist alone physically, or two or more units may be integrated into one unit. The integrated unit may be implemented in a form of hardware, or may be implemented in a form of software functional unit.

The computer-readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An ambient light calibration method, applied to a terminal device, comprising:
obtaining location information of an ambient light sensor;
obtaining first ambient light data detected by the ambient light sensor;
determining an image matting region based on the location information of the ambient light sensor;
performing image matting on layers of a displayed image frame of the terminal device based on the image matting region to obtain matted images corresponding to the layers, and compositing the matted images corresponding to the layers to obtain a screenshot image; and
calibrating the first ambient light data based on the screenshot image and screen brightness of the terminal device, to obtain second ambient light data.

2. The ambient light calibration method according to claim 1, wherein the determining an image matting region based on the location information of the ambient light sensor comprises:
determining, based on the location information of the ambient light sensor, a display region that is on a screen of the terminal device and that corresponds to the location information of the ambient light sensor; and
determining, based on the display region, the image matting region that is in a displayed image of the terminal device and that corresponds to the display region.

3. The ambient light calibration method according to claim 1 or 2, wherein the performing image matting on layers of a displayed image frame of the terminal device based on the image matting region to obtain matted images corresponding to the layers comprises:
obtaining the layers of the displayed image frame of the terminal device; and
performing image matting on the layers of the displayed image frame of the terminal device based on the image matting region, to obtain the matted images corresponding to the layers.

4. The ambient light calibration method according to any one of claims 1 to 3, wherein the compositing the matted images corresponding to the layers to obtain a screenshot image comprises:
superimposing and compositing, according to a composition rule, the matted images corresponding to the layers, to obtain the screenshot image, wherein the composition rule is a composition rule used for compositing the layers to obtain the image frame.

5. The ambient light calibration method according to any one of claims 1 to 4, wherein the calibrating the first ambient light data based on the screenshot image and screen brightness of the terminal device, to obtain second ambient light data comprises:
determining, based on the screenshot image and the screen brightness of the terminal device, an error in the first ambient light data caused by screen backlight; and
obtaining the second ambient light data based on the first ambient light data and the error in the first ambient light data caused by the screen backlight.

6. The ambient light calibration method according to claim 5, wherein the determining, based on the screenshot image and the screen brightness of the terminal device, an error in the first ambient light data caused by screen backlight comprises:
calculating luminous intensity of each pixel in the screenshot image based on displayed content of the screenshot image and the screen brightness of the terminal device;
determining, based on a distance between each pixel in the screenshot image and the ambient light sensor, an impact weight, on the ambient light sensor, of each pixel in the screenshot image when emitting light;
determining, based on the luminous intensity of each pixel in the screenshot image and the impact weight, noise generated by each pixel in the screenshot image; and
determining, based on the noise of each pixel in the screenshot image, the error in the first ambient light data caused by the screen backlight.

7. The ambient light calibration method according to any one of claims 1 to 5, wherein the terminal device comprises an application processing core and a sensor management core; and
the obtaining location information of an ambient light sensor and obtaining first ambient light data detected by the ambient light sensor comprises:
obtaining, by the application processing core, the location information of the ambient light sensor from the sensor management core; and
obtaining, by the application processing core from the sensor management core, the ambient light data detected by the ambient light sensor.

8. The ambient light calibration method according to any one of claims 1 to 5, wherein the terminal device comprises an application processing core and a sensor management core; and
the determining an image matting region based on the location information of the ambient light sensor, performing image matting on layers of a displayed image frame of the terminal device based on the image matting region to obtain matted images corresponding to the layers, compositing the matted images corresponding to the layers to obtain a screenshot image, and calibrating the first ambient light data based on the screenshot image and screen brightness of the terminal device, to obtain second ambient light data comprises:
determining, by the application processing core, the image matting region based on the location information of the ambient light sensor;
performing, by the application processing core, image matting on the layers of the displayed image frame of the terminal device based on the image matting region, to obtain the matted images corresponding to the layers, and compositing the matted images corresponding to the layers to obtain the screenshot image; and
calibrating, by the application processing core, the first ambient light data based on the screenshot image and the screen brightness of the terminal device, to obtain the second ambient light data.

9. A terminal device, comprising:
an application processing core, configured to obtain location information of an ambient light sensor from a sensor core, wherein
the ambient light sensor is configured to detect first ambient light data of the terminal device;
the application processing core is configured to obtain, from the sensor management core, the first ambient light data detected by the ambient light sensor;
the application processing core is configured to determine an image matting region based on the location information of the ambient light sensor;
the application processing core is configured to: perform image matting on layers of a displayed image frame of the terminal device based on the image matting region to obtain matted images corresponding to the layers, and composite the matted images corresponding to the layers to obtain a screenshot image; and
the application processing core is configured to calibrate the first ambient light data based on the screenshot image and screen brightness of the terminal device, to obtain second ambient light data.

10. A terminal device, wherein the terminal device comprises a processor, a memory, an ambient light sensor, and a display screen, the ambient light sensor is configured to detect ambient light data of the terminal device, the memory, the ambient light sensor, and the display screen are coupled to the processor, the memory is configured to store computer-readable instructions, and when the processor reads the computer-readable instructions from the memory, the terminal is enabled to perform the method according to any one of claims 1 to 8.

11. A chip system, comprising at least one processor and at least one interface circuit, wherein the at least one interface circuit is configured to: perform a transceiver function and send instructions to the at least one processor, and when the at least one processor executes the instructions, the at least one processor performs the method according to any one of claims 1 to 8.

12. A computer-readable storage medium, wherein the computer-readable storage medium comprises a computer program, and when the computer program is run on a terminal device, the terminal device is enabled to perform the method according to any one of claims 1 to 8.

13. A computer program product, wherein when the computer program product runs on a computer, the computer is enabled to perform the method according to any one of claims 1 to 8.
